# EUROPEAN PATENT SPECIFICATION

(11) **EP 3 815 512 B1**
(45) Date of publication and mention of the grant of the patent: **06.07.2022**
(21) Application number: 19827573.7
(22) Date of filing: 24.06.2019
(51) Int. Cl.: A01G 9/14, A01G 13/02, B32B 23/08

(54) **AGRICULTURAL MATERIAL, AGRICULTURAL MATERIAL ROLL, AND AGRICULTURAL HOUSE**
LANDWIRTSCHAFTLICHES MATERIAL, LANDWIRTSCHAFTLICHE MATERIALROLLE UND LANDWIRTSCHAFTLICHES HAUS
MATÉRIAU AGRICOLE, ROULEAU DE MATÉRIAU AGRICOLE ET MAISON AGRICOLE

(30) Priority: 26.06.2018 JP 2018120724
(43) Date of publication of application: 05.05.2021
(73) Proprietor: FUJIFILM Corporation, Tokyo 106-8620 (JP)
(72) Inventor: ISHII, Eiji, Minami-ashigara-shi, Kanagawa 250-0193 (JP); KATANO, Shogo, Minami-ashigara-shi, Kanagawa 250-0193 (JP); WASHIYA, Kimito, Minami-ashigara-shi, Kanagawa 250-0193 (JP)
(74) Representative: Hoffmann Eitle
(86) International application number: PCT/JP2019/024966
(87) International publication number: WO 2020/004331

(56) References cited:
- EP-A1- 2 514 301
- CN-A- 106 313 843
- JP-A- 2009 204 834
- JP-A- 2015 213 499
- JP-A- 2016 007 183
- JP-A- 2017 057 370

## Description

### BACKGROUND OF THE INVENTION

### 1. Field of the Invention

The present invention relates to an agricultural material according to claim 1, an agricultural material roll according to claim 7 formed from the agricultural material and an agricultural house according to claim 8 comprising the agricultural material.

### 2. Description of the Related Art

There is known an agricultural house in which a cellulose acylate film is spread over a framework (see, for example, refer to JP2016-185122A). The cellulose acylate film described in JP2016-185122A has an equilibrium moisture content of 4% to 8% at a relative humidity of 80%. Since a cellulose acylate film has excellent transparency, a cellulose acylate film can sufficiently irradiate plants and/or media such as soil in an agricultural house with external light. A cellulose acylate film further has an excellent property of allowing water vapor to permeate therethrough (hereinafter, referred to as moisture permeability) and can maintain the carbon dioxide (CO₂) concentration in the agricultural house at a level that plants can perform photosynthesis, without ventilation.

An agricultural house in which a cellulose acylate film having a saponified layer formed on its surface is spread over a framework is also known (see, for example, JP2017-057370A). The saponified layer is a layer formed by saponification of a cellulose acylate film.

There is also known an agricultural house in which an agricultural resin film obtained by forming a coating film on a base resin film, with an adhesive acrylic resin layer interposed therebetween, is spread over a framework (see, for example, JP2009-296893A). The base resin film is a polyolefin film, a polystyrene film, a polyester film, a polycarbonate film, a cellulose acylate film, or the like. The coating film contains two components, namely, a fluorine-containing acrylic polymer and a vinylidene fluoride-based resin, as main components. The fluorine-containing acrylic polymer is a copolymer of an acrylic monomer and a perfluoroalkyl group-containing acrylic monomer. The adhesive acrylic resin layer contains a polymer obtained by polymerizing an acrylic monomer, an ultraviolet-absorbing monomer, an acrylic monomer having a cycloalkyl group, and an ultraviolet-stable monomer.

### SUMMARY OF THE INVENTION

Agricultural houses in which a film is spread over a framework are required to have robustness in the case of being used for a long period of time. Therefore, it is preferable to use a backbone formed of a metal for the framework, and it is preferable that the film is fixed to the backbone with screws.

Cellulose acylate films have excellent moisture permeability as described above and also have excellent transparency, and thus, cellulose acylate films are suitable for agricultural houses. However, in a case in which a cellulose acylate film is fixed to a backbone with screws, a slit is produced from a hole (through-hole) formed by penetration of a screw, this slit progresses, for example, during screwing of the screw, and in some cases, the film may break. In order to prevent such slits and breakage of the film, there is available a method of preliminarily reinforcing the sites for screw penetration in the film with an adhesive tape or the like. However, such a method is time-consuming.

Furthermore, some cellulose acylate films may be creased in a case of being fixed to a backbone with screws (hereinafter referred to as knick deformation), and there is a concern that those films may crack at a dead fold.

Thus, it is an object of the present invention to provide an agricultural material in which in a case where the material is fixed with screws, breakage starting from a through-hole of a screw and cracking caused by knick deformation are suppressed; an agricultural material roll; and an agricultural house.

The agricultural material according to an aspect of the present invention comprises a cellulose acylate layer and a polymer layer, and has a tear strength of at least 0.10 N. The cellulose acylate layer is formed of cellulose acylate. The polymer layer is provided on one surface of the cellulose acylate layer, has a moisture permeation resistance of at most 7.5×10⁻⁴ m²·day/g per 1 µm of thickness, and is formed of a polymer different from cellulose acylate.

It is preferable that a peel strength between the cellulose acylate layer and the polymer layer is at least 0.10 N/25 mm.

It is preferable that the agricultural material comprises the polymer layer between a pair of the cellulose acylate layers.

It is preferable that the thickness of the polymer layer is in a range of from 10 µm to 150 µm.

It is preferable that a thickness is in a range of from 80 µm to 300 µm. It is preferable that the polymer in the polymer layer is any one of polyurethane, polyamide, a polyvinyl alcohol-based polymer, a polyacrylamide derivative, or a polyacrylonitrile derivative.

In the agricultural material roll according to an aspect of the present invention, the above-described agricultural material formed elongatedly is wound into a roll form.

The agricultural house according to an aspect of the present invention comprises a framework formed of a metal backbone; and the above-mentioned agricultural material forming a space partitioned from the outside, by being spread over the framework.

It is preferable that the agricultural material is fixed to the backbone with screws.

It is preferable that each of the screws fixes the agricultural material to the backbone, with a plate-shaped pressing member disposed on the agricultural material being interposed between the screw and the agricultural material.

According to the present invention, in a case in which fixing is achieved with screws, breakage starting from a through-hole of a screw and cracking caused by knick deformation are suppressed.

### BRIEF DESCRIPTION OF THE DRAWINGS

Fig. 1 is an outline perspective view of an agricultural house.
Fig. 2 is an explanatory diagram of an agricultural material fixed to a backbone, and (A) of Fig. 2 is an explanatory plan view, while (B) of Fig. 2 is an explanatory cross-sectional view.
Fig. 3 is an explanatory diagram of a pressing member.
Fig. 4 is an outline perspective view of an agricultural material roll.
Fig. 5 is an explanatory diagram of the layer configuration of the agricultural material.
Fig. 6 is an explanatory diagram of another fixing mode of the agricultural material to the backbone.
Fig. 7 is an explanatory diagram illustrating the layer configuration of a film
Fig. 8 is an explanatory diagram illustrating the layer configuration of a film
Fig. 9 is an explanatory diagram illustrating the layer configuration of a film
Fig. 10 is an explanatory diagram of a testing method for screw driving.

### DETAILED DESCRIPTION

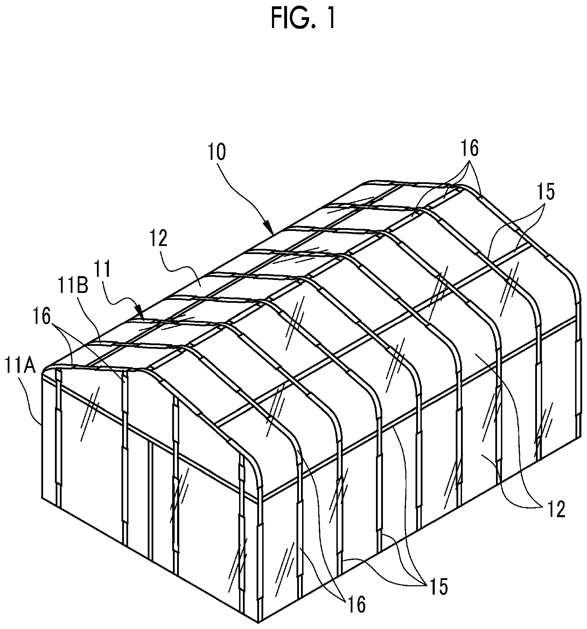

The agricultural house 10 shown in Fig. 1 comprises a framework 11 and a film-form agricultural material 12. The framework 11 is intended for supporting the agricultural material 12 and is formed three-dimensionally (three-dimension) as a plurality of metal backbones 15 is fitted together. The backbones 15 are formed in a long length, and the backbones 15 are fixed to one another by, for example, metal fasteners for connection and fixing (not shown in the diagram). The framework 11 comprises a main body part 11A, which is rectangular-shaped as viewed in a plan view, and a triangular chevron-shaped roof 11B provided on the main body part 11A; however, the shape of the framework is not limited to this example. For example, the roof may be a so-called vaulted roof having an arch shape, may have a shape that is flat in the horizontal direction, or may have an inclined shape whose height gradually decreases in one direction. The number of backbones 15 in the framework 11, the direction of each backbone 15, and the method of fitting together are not particularly limited.

Although any known material for agricultural houses can be used as the backbone 15, a backbone made of metal is preferred from the viewpoint of durability (strength), and examples thereof include a solid steel material and a hollow steel pipe. In this example, a steel pipe is used.

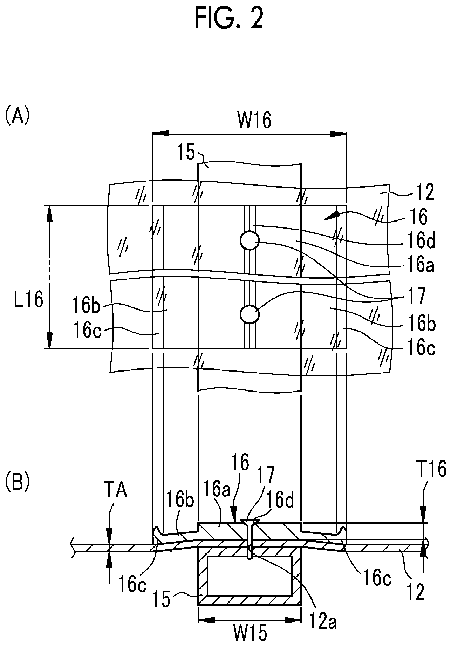

As the agricultural material 12 is spread over the framework 11, a space partitioned from the outside is formed inside the framework 11. The agricultural material 12 may be spread over the inner side of the framework 11 or may be spread over the outer side of the framework 11, and in this example, the agricultural material 12 is spread over the outer side. This is because it is easier to spread the agricultural material 12 on the outer side of the framework 11 than on the inner side. The agricultural material 12 is fixed to a backbone 15 with screws 17 (see Fig. 2), with a pressing member 16 interposed therebetween. In Fig. 1, the screws 17 are not shown in order to avoid complication of the drawing. The pressing member 16 may have a shape extending in the longitudinal direction (rectangular shape) of the backbone 15 as shown in Fig. 1, or may have a shape shorter than that, for example, a square shape. In this example, a pressing member 16 having a shape extending in the longitudinal direction (rectangular shape) of the backbone 15 is used.

As shown in Fig. 2, the pressing member 16 is disposed on the agricultural material 12, thereby interposing the agricultural material 12 between the pressing member 16 and the backbone 15, and the agricultural material 12 is fixed to the backbone 15 by having a through-hole 12a formed by screwing of a screw 17. A hole into which the screw 17 penetrates may be preliminarily formed in the pressing member 16. In Fig. 2, the thickness TA of the agricultural material 12 is greatly exaggerated with respect to other members and the like. The screw 17 is screwed from the side of the pressing member 16 toward the backbone 15. The pressing member 16 is disposed against the backbone 15, in a state of being symmetrical with respect to the center of the backbone 15 in the width direction. The screw 17 is screwed approximately into the center of the pressing member 16 and the backbone 15 in the width direction of the backbone 15. In the backbone 15, a screw hole into which the screw 17 is screwed may be provided in advance; however, the screw hole is not provided in this example and is formed by screwing of the screw 17.

In Fig. 2, only two screws 17 are depicted; however, the number of screws 17 per pressing member 16 is not particularly limited. That is, as long as the pressing member 16 and the agricultural material 12 can be fixed in a stable state, the number may be appropriately determined and may be one or three or more. For example, in a case in which the length (hereinafter, simply referred to as "length") L16 of the pressing member 16 in the longitudinal direction of the backbone 15 is set to 2 m, the screws 17 are provided at a pitch of 20 cm, and nine screws 17 will be used per pressing member 16.

The screw 17 of this example is a tapping screw having a sharp tip (tapered), and the entire shaft is screw-threaded. However, the screw is not limited to this, and various other known screws may be used. Furthermore, although a washer is not used in this example, a screw integrated with a washer may also be used.

The pressing member 16 is plate-shaped and has a central part 16a, thin parts 16b, and end parts 16c in order from the center in the width direction of the backbone 15. The central part 16a has the largest thickness T16, and a groove 16d having a V-shaped cross-section is formed at the center of the backbone 15 in the width direction. The screw 17 is screwed into this groove 16d. The thin parts 16b have a thickness T16 smaller than that of the central part 16a. The end parts 16c have a thickness T16 larger than that of the thin parts 16b and are formed in a state in which the cross-section is rounded. The pressing member may have a flat plate shape with a constant thickness T16.

The pressing member 16 does not need to be used; however, it is preferable to use the pressing member because a slit is not likely to be produced from the through-hole formed by screwing of the screw 17, and even in a case in which a slit has occurred, the slit does not readily progress. As rounded end parts 16c are formed in the pressing member 16, even in a case in which the spread agricultural material 12 is flapped by the wind, the agricultural material 12 does not easily crack. Therefore, even in the case of a flat plate-shaped pressing member having a constant thickness T16 is used, it is preferable that rounded end parts are similarly formed.

The length of the pressing member 16 in the width direction of the backbone 15 (hereinafter, referred to as width) will be designated as W16. The width W16 of the pressing member 16 is larger than the width W15 of the backbone 15; however, without being limited to this, the width W16 may be the same as the width W15 or smaller than the width W15. However, it is preferable that the width W16 is larger than the width W15, from the viewpoint of suppressing the fluttering of the agricultural material 12. The width W16 of the pressing member 16 is preferably in the range of from 10 mm to 60 mm. The length L16 of the pressing member 16 is not particularly limited as described above, and in this example, various lengths L16 within the range of from 50 mm to 3,000 mm are adopted. The width W15 of the backbone 15 is also not particularly limited; however, the width W15 is preferably in the range of from 5 mm to 50 mm. In this example, the width W15 is 10 mm and the width W16 is 20 mm.

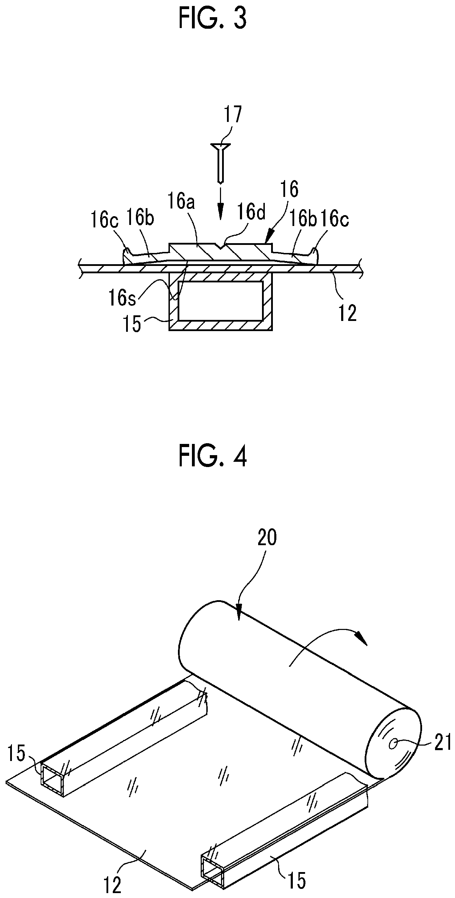

In the pressing member 16, as shown in Fig. 3, in a state before the screw 17 is screwed in, a cross-section of a contacting surface 16s that is in contact with the agricultural material 12 has a concave shape. Thereby, in a case in which the agricultural material 12 is pressed with the pressing member 16, the agricultural material 12 is appropriately pulled, and fluttering is further suppressed. For example, the pressing member 16 deforms the agricultural material 12 into a shape conforming to the curvature of the contacting surface 16s in accordance with the screwing of the screw 17 and pulls the agricultural material. As a result, fluttering is suppressed. Regarding the screwing of the screw 17, the pulled state of the agricultural material 12 may be observed, and the quantity of screwing may be regulated.

The agricultural material 12 is produced in a long length by the method that will be described below and is wound into a roll form as shown in Fig. 4. Thus, an agricultural material roll 20 is obtained. In the agricultural material roll 20, the agricultural material 12 is wound around a winding core 21; however, the winding core 21 does not need to be included. The agricultural material 12 is spread, for example, in a state of bridging two backbones 15 as shown in Fig. 4, by rolling the agricultural material roll 20 in the longitudinal direction of each backbone 15. In addition, it is also acceptable to spread the agricultural material 12 while having a pressure-sensitive adhesive tape (not shown in the diagram) stuck in advance to the surface of the backbone 15, or while sticking the pressure-sensitive adhesive tape.

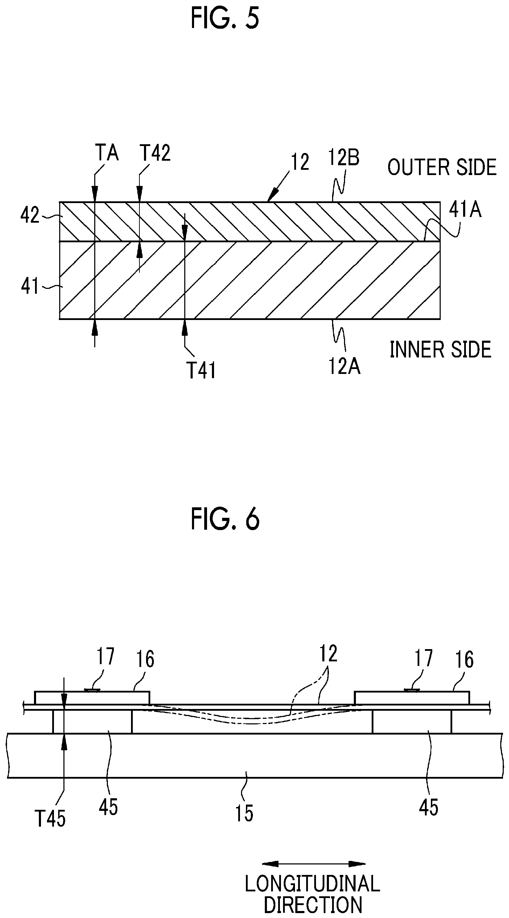

As shown in Fig. 5, the agricultural material 12 comprises a cellulose acylate layer 41 formed of cellulose acylate; and a polymer layer 42 formed of a polymer different from cellulose acylate. The cellulose acylate layer 41 and the polymer layer 42 are in a state of being in close contact with each other, and the polymer layer 42 is provided in a state of covering one surface (hereinafter, referred to as first CA surface) 41A of the cellulose acylate layer 41.

The cellulose acylate layer 41 is formed only of cellulose acylate in this example; however, the cellulose acylate layer may include other components in addition to cellulose acylate. The percentage content by mass of the components other than cellulose acylate in the cellulose acylate layer 41 is preferably from 0 to 50 in a case in which the mass of cellulose acylate is taken as 100. Examples of the other components include additives. Examples of the additives include an ultraviolet absorber, a plasticizer, and a matting agent.

The agricultural material 12 is disposed in a state in which the cellulose acylate layer 41 comes to the inner side of the agricultural house 10 (see Fig. 1) and the polymer layer 42 comes to the outer side. Cellulose acylate has high transparency, and therefore, external light is effectively irradiated on plants and/or, for example, cultivation beds (media) such as seed beds in the agricultural house 10.

Furthermore, since the cellulose acylate layer 41 contains cellulose acylate, the equilibrium moisture content increases with an increase in the humidity in the agricultural house 10. Due to this increase in the equilibrium moisture content, the cellulose acylate layer 41 absorbs moisture. The absorption of moisture by the cellulose acylate layer 41 lowers the humidity in the agricultural house 10, and thereby the equilibrium moisture content of the cellulose acylate layer is lowered so that the cellulose acylate layer 41 releases moisture. In this way, any change in the humidity inside the agricultural house 10 is suppressed. As a result, dew condensation on a first material surface 12A of the agricultural material 12, which is a wall surface on the inner side of the agricultural house 10, is suppressed. Since dew condensation is suppressed, a decrease in the amount of light from the outside is suppressed. The above-described equilibrium moisture content is the equilibrium moisture content at 25°C and a relative humidity of 80%. These temperature and relative humidity correspond to the temperature and relative humidity that are conventionally set as a plant cultivation environment. In Fig. 5, reference numeral 12B is assigned to a second material surface of the agricultural material 12, which is a wall surface on the outer side of the agricultural house 10.

Cellulose acylate has an acyl group because a hydroxy group of cellulose has been esterified with a carboxylic acid. The cellulose acylate is not particularly limited; however, the degree of acyl group substitution of the cellulose acylate is preferably in the range of from 2.00 to 2.97. Thereby, the change in the humidity inside the agricultural house 10 is more reliably suppressed to a low level. As the degree of acyl group substitution is lower, the amount of moisture absorbed by the cellulose acylate layer 41 is increased, and therefore, the cellulose acylate layer is more likely to be deformed due to moisture absorption. However, by adjusting the degree of acyl group substitution of the cellulose acylate to 2.00 or more, deformation is more reliably suppressed, and therefore, it is preferable. The upper limit of the degree of acyl group substitution is theoretically 3.00; however, a cellulose acylate having a degree of acyl group substitution of more than 2.97 is not easily synthesized. Therefore, the degree of acyl group substitution of cellulose acylate is adjusted to 2.97 or less.

The degree of acyl group substitution of cellulose acylate is more preferably within the range of from 2.40 to 2.95, and even more preferably within the range of from 2.70 to 2.95. As is well known, the degree of acyl group substitution is the proportion at which hydroxy groups of cellulose have been esterified with carboxylic acid, that is, the degree of substitution of acyl groups.

The acyl group of cellulose acylate is not particularly limited and may be an acetyl group having one carbon atom or may be an acyl group having two or more carbon atoms. The acyl group having two or more carbon atoms may be an aliphatic group or an aryl group, and examples thereof include an alkyl carbonyl ester, an alkenyl carbonyl ester or an aromatic carbonyl ester, and an aromatic alkyl carbonyl ester of cellulose. Each of these may further have substituted groups. Examples include a propionyl group, a butanoyl group, a pentanoyl group, a hexanoyl group, an octanoyl group, a decanoyl group, a dodecanoyl group, a tridecanoyl group, a tetradecanoyl group, a hexadecanoyl group, an octadecanoyl group, an isobutanoyl group, a t-butanoyl group, a cyclohexanecarbonyl group, an oleoyl group, a benzoyl group, a naphthylcarbonyl group, and a cinnamoyl group.

The acyl group of the cellulose acylate constituting the cellulose acylate layer 41 may be of one kind only or of two or more kinds; however, it is preferable that at least one kind of the acyl group an acetyl group. In a case in which the cellulose acylate is a cellulose acylate having an acetyl group, the cellulose acylate layer 41 easily absorbs moisture, and therefore, the effect of suppressing the humidity change in the agricultural house 10 is further enhanced. Most preferably, it is more preferable that the cellulose acylate is a cellulose acylate in which all the acyl groups are acetyl groups, that is, the cellulose acylate is cellulose acetate. In this example, cellulose triacetate (TAC) is used.

The degree of acyl group substitution can be determined by a conventionally used method. For example, the degree of acetylation (degree of acetyl group substitution) is determined according to the measurement and calculation of the degree of acetylation in ASTM: D-817-91 (test method for cellulose acetate and the like). The degree of acyl group substitution can also be measured by measuring the distribution of the degree of acylation (degree of acyl group substitution) by high performance liquid chromatography. As an example of this method, the measurement of the degree of acetylation of cellulose acetate is carried out by dissolving a sample in methylene chloride, measuring the distribution of the degree of acetylation by means of a linear gradient from a mixed liquid of methanol and water as an eluent (mass ratio of methanol:water is 8:1) to a mixed liquid of dichloromethane and methanol (mass ratio of dichloromethane:methanol is 9:1) using a column Novapac phenyl (Waters), and comparing the result with a calibration curve based on standard samples having different degrees of acetylation. These measurement methods can be obtained by referring to the method described in JP2003-201301A. The measurement of the degree of acetylation of cellulose acylate is, in a case in which the cellulose acylate layer 41 includes additives, preferably measurement by high performance liquid chromatography.

Since the cellulose acylate layer 41 is formed of cellulose acylate, the layer has high moisture permeability, and the moisture permeability is generally in the range of from 200 g/m²·day to 1,500 g/m²·day. In addition to the equilibrium moisture content mentioned above, this high moisture permeability allows the change in the humidity inside the agricultural house 10 to be suppressed to a lower level. The moisture permeability is determined by the cup method based on Japanese Industrial Standard JIS Z 0208. The measurement conditions are a temperature of 40°C and a relative humidity of 90%.

The polymer layer 42 is for suppressing breakage starting from the through-hole 12a in the cellulose acylate layer 41 and cracking caused by knick deformation. In a case in which the agricultural material roll 20 (see Fig. 4) is rolled on backbones 15 and then fixed with screws 17 by means of a pressing member 16, knick deformation often occurs in an area of the agricultural material 12 where wrinkles are intensely generated. The polymer layer 42 has a moisture permeation resistance of at most 7.5×10⁻⁴ m²·day/g, that is, 7.5×10⁻⁴ m²·day/g or less, per 1 µm of thickness. Thereby, the polymer layer 42 can be made to have a larger thickness T42, to the extent that the high moisture permeability of the cellulose acylate layer 41 is not hindered. Since the thickness T42 can be made larger, the tear strength of the agricultural material 12 is at least 0.10 N, that is, 0.10 N or more. As such, the tear strength of the agricultural material 12 is adjusted to 0.10 N or more.

Therefore, in a case in which a screw 17 is screwed in, the occurrence of a slit starting from the through-hole 12a in the cellulose acylate layer 41 that is in close contact is suppressed, and even in a case in which a slit has occurred, progress of the slit is suppressed. Therefore, in the agricultural material 12, breakage starting from the through-hole 12a is suppressed. Furthermore, in a case in which the agricultural material 12 is fixed to a backbone 15 with a screw 17, knick deformation is suppressed, and even in a case in which knick deformation has occurred, cracking at a dead fold is suppressed. Furthermore, by making the thickness of the polymer layer 42 larger, the thickness TA of the agricultural material 12 can also be made larger to that extent. Accordingly, even in a case in which the agricultural house 10 is flapped by the wind, fluttering of the agricultural material 12 is suppressed, and therefore, the agricultural material is not likely to break for a long time.

With regard to the polymer layer 42, the moisture permeation resistance per 1 µm of thickness is preferably from 1.0×10⁻⁶ m²·day/g to 7.5×10⁻⁴ m²·day/g, more preferably from 3.0×10⁻⁶ m²·day/g to 5.0×10⁻⁴ m²·day/g, even more preferably from 5.0×10⁻⁶ m²·day/g to 2.0×10⁻⁴ m²·day/g, and particularly preferably from 7.0×10⁻⁶ m²·day/g to 1.0×10⁻⁴ m²·day/g.

The moisture permeation resistance is calculated as the reciprocal of the above-mentioned moisture permeability and indicates the difficulty of the passage of water vapor. Specifically, in a case in which the moisture permeability is A (g/m²·day), the moisture permeation resistance R is 1/A. The moisture permeation resistance R per unit thickness of a material is determined by dividing the moisture permeation resistance R by the thickness of the material. For example, the moisture permeation resistance R per 1 µm of the thickness of the polymer layer 42 is calculated by R/d, in a case in which the thickness of the polymer layer 42 is d µm.

In a case in which the tear strength is 0.10 N or more, the effect of suppressing breakage and cracking is sufficiently obtained; however, it is more preferable to have larger tear strength. However, since the maximum value of the tear strength that may be obtained is 7.50 N, a preferred range is in the range of from 0.10 N to 7.50 N, more preferably in the range of from 0.30 N to 6.50 N, even more preferably in the range of from 0.80 N to 5.50 N, and particularly preferably in the range of from 1.00 N to 3.00 N.

The tear strength is determined by the Elmendorf method, and in this example, it is measured using an Elmendorf tear tester (digital type) manufactured by Toyo Mechanica, Inc. Specifically, a sample having a size of 76 mm × 63 mm cut out from the agricultural material 12 is placed on a sample stand of an Elmendorf tear tester, with the long side of the sample being laid horizontally, and an incision of 2 cm is made in the sample at the testing site. Then, the tear strength is measured with a load of 16 N and a pendulum angle of 70 degrees.

The polymer (resin) forming the polymer layer 42 is not particularly limited as long as it is a polymer different from cellulose acylate and has a moisture permeation resistance of 7.5×10⁻⁴ m²·day/g or less. Preferred examples include polyurethane, polyamide, a polyvinyl alcohol-based polymer, a polyacrylamide derivative, and a polyacrylonitrile derivative, and it is preferable that the polymer is any of these.

Regarding the polyurethane, a commercially available product can be used. Specifically, a two-component curing type polyurethane, and thermoplastic polyurethane elastomers of ester (adipate) type, ester (lactone) type, ether type, polycarbonate type, aliphatic non-yellowing type, and the like can be used. Examples of commercially available products include PANDEX (registered trademark) GW series "GW-3670/HX-770" (manufactured by DIC Corporation), a system for two-component curing type continuous coating urethane film; ELASTOLLAN (registered trademark) C80A, C85A, C90A, C95A, C64D, 1180A, 1185A, 1190A, 1195A, 1164D, ET385, ET880, ET885, ET890, ET858D, ET860D, ET864D, NY585, NY90A, and NY1197A (manufactured by BASF Japan, Ltd.) as thermoplastic polyurethane elastomers; PANDEX (registered trademark) T-5105, T-5201, T-5265, T-5102, T-8175, T-8180, T-8185, T-8190, T-8195, DP9370A, 5377A, 588, KU2-8659, and DP5094A (manufactured by DIC Covestro Polymer, Ltd.); and RESAMINE (registered trademark) P-1000, P-7000, and P-2000 series (manufactured by Dainichiseika Color & Chemicals Manufacturing Co., Ltd.). Two or more kinds of urethane elastomers may be used in combination. Alternatively, a commercially available polyurethane film may also be used. Specific examples include TOUGH GRACE (registered trademark) manufactured by Takeda Sangyo Co., Ltd.

Examples of the polyamide include polyamides such as nylon 6 obtained by ring-opening polymerization of ε-caprolactam, and nylon 66 obtained by polycondensation of hexamethylenediamine and adipic acid. Furthermore, a commercially available polyamide film may also be used. Specific examples thereof include KOHBARRIER (registered trademark) ONY manufactured by Kohjin Film & Chemicals Co., Ltd., and HARDEN (registered trademark) film NAP02 manufactured by Toyobo Co., Ltd.

Examples of the polyvinyl alcohol-based polymer include polyvinyl alcohol, a copolymer of polyvinyl alcohol and polyvinyl acetate based on partial saponification of polyvinyl acetate, and a copolymer of polyvinyl alcohol and ethylene.

In a case in which the polymer constituting the polymer layer 42 has the above-mentioned moisture permeation resistance per 1 µm, and the tear strength with respect to the cellulose acylate layer 41 is 0.10 N or more, the polymer of the polymer layer 42 has pressure-sensitive adhesiveness in many cases. In particular, many of the above-mentioned polyurethane, polyvinyl alcohol-based polymer, and the like have pressure-sensitive adhesiveness. Therefore, the second material surface 12B of the agricultural material 12 has pressure-sensitive adhesiveness. In this regard, since the agricultural material 12 is disposed such that the cellulose acylate layer 41 comes on the inner side in the agricultural house 10 as described above, by spreading the agricultural material 12 from the outer side with respect to the framework 11 as in this example, the agricultural material roll 20 is spread in a state in which the cellulose acylate layer 41 having extremely low pressure-sensitive adhesiveness comes into contact with the backbone 15. Therefore, the agricultural material roll 20 is easily rollable over the framework 11 and has satisfactory workability.

It is preferable that the peel strength between the cellulose acylate layer 41 and the polymer layer 42 is at least 0.10 N, that is, 0.10 N or more, per 25 mm of the width. Thereby, the occurrence of a slit starting from a through-hole 12a is further suppressed, and even in a case in which a slit has occurred, the progress of the slit is further suppressed, so that breakage starting from the through-hole 12a is suppressed. Furthermore, in a case in which the agricultural material 12 is fixed to a backbone 15 with a screw 17, knick deformation is suppressed, and even in a case in which knick deformation has occurred, cracking at a dead fold is suppressed. The peel strength per 25 mm of the width is per 25 mm of the width as described above, and therefore, the unit of the peel strength in the following description is described as "N/25 mm".

The peel strength between the cellulose acylate layer 41 and the polymer layer 42 is preferably in the range of from 0.10 N/25 mm to 30.00 N/25 mm, more preferably in the range of from 0.50 N/25 mm to 20.00 N/25 mm, even more preferably in the range of from 0.70 N/25 mm to 15.00 N/25 mm, and particularly preferably in the range of from 1.00 N/25 mm to 10.00 N/25 mm. The peel strength between the cellulose acylate layer 41 and the polymer layer 42 can be adjusted to the above-described preferred range by means of the type of the polymer of the polymer layer 42, the degree of acylation of the cellulose acylate of the cellulose acylate layer 41, and the type of additive, as well as the method of forming the polymer layer 42, a method of using an adhesive material between the polymer layer 42 and the cellulose acylate layer 41, or the like.

Furthermore, the peel strength can be increased and adjusted to a preferable range by laminating the cellulose acylate layer 41 and the polymer layer 42, immersing the laminated sheet in water, and then subjecting the laminated sheet to a heat treatment. This water may be an aqueous solution of an alkali or an acid used for a saponification treatment based on an immersion method that will be described later, washing water, or the like. Therefore, in the saponification treatment of the laminated sheet by an immersion method, the peel strength between the cellulose acylate layer 41 and the polymer layer 42 can be increased by subjecting the laminated sheet to an immersion step and a drying step.

The thickness T42 of the polymer layer 42 is preferably in the range of from 10 µm to 150 µm. In a case in which the thickness T42 is 10 µm or more, the occurrence of a slit starting from the through-hole 12a is more reliably suppressed as compared with the case where the thickness T42 is less than 10 µm, and even in a case in which a slit has occurred, the progress of the slit is more reliably suppressed. Furthermore, in a case in which the agricultural material 12 is fixed to a backbone 15 with screws 17, knick deformation is further suppressed, and even in a case in which the knick deformation occurs, cracking at a dead fold is more surely suppressed. In a case in which the thickness T42 is 150 µm or less, in the agricultural material 12, the high moisture permeability of the cellulose acylate layer 41 is more reliably utilized, as compared with the case where the thickness T42 exceeds 150 µm. In addition, as the thickness T42 is 150 µm or less, in a case in which the agricultural material roll 20 is spread over the framework, due to its light weight, for example, it is easy to roll over the agricultural material roll and satisfactory workability is obtained, as compared with the case where the thickness T42 exceeds 150 µm.

The thickness T42 is more preferably in the range of from 15 µm to 100 µm, and even more preferably in the range of from 20 µm to 80 µm.

The thickness TA of the agricultural material 12 is preferably in the range of from 80 µm to 300 µm. Since the thickness TA is 80 µm or more, the occurrence of a slit starting from the through-hole 12a is more reliably suppressed as compared with the case where the thickness TA is less than 80 µm, and even in a case in which a slit has occurred, the progress of the slit is more reliably suppressed. Furthermore, in a case in which the agricultural material 12 is fixed to a backbone 15 with screws 17, knick deformation is further suppressed, and even in a case in which the knick deformation occurs, cracking at a dead fold is more surely suppressed. As the thickness TA is 300 µm or less, in a case in which the agricultural material roll 20 is spread over the framework, satisfactory workability is obtained because the agricultural material roll 20 is lighter, as compared to the case in which the thickness TA exceeds 300 µm.

The thickness TA is more preferably in the range of from 90 µm to 230 µm, and even more preferably in the range of from 100 µm to 200 µm. The thickness T41 of the cellulose acylate layer 41 is not particularly limited; however, in consideration of the above-described preferable ranges of the thickness TA and the thickness T41, the thickness T41 is preferably in the range of from 20 µm to 100 µm, more preferably in the range of from 30 µm to 90 µm, and even more preferably in the range of from 40 µm to 80 µm.

In the above example, the agricultural material 12 is fixed directly to the backbone 15, that is, in a state of being in contact with the backbone 15; however, the fixing method is not limited to this. In Fig. 6, a plate-shaped raising member 45 is disposed between the backbone 15 and the agricultural material 12. The horizontal direction in Fig. 6 is the longitudinal direction of the backbone 15. The raising member 45 prevents, by means of the thickness T45 of the raising member 45, the agricultural material 12 from coming into contact with the backbone 15 in a case in which the agricultural material 12 flutters, and even if contacting occurs, the raising member 45 is intended to suppress the contact pressure to a low level. The cellulose acylate layer 41 of the agricultural material 12 has a property of absorbing moisture according to the equilibrium moisture content described above. Therefore, in a state in which the cellulose acylate layer 41 contains a large amount of moisture, the cellulose acylate layer 41 stretches as compared with the state in which the moisture content is small. As a result, the agricultural material 12 itself is also brought into a slackened state indicated by a two-dotted broken line, as compared with the tightened state indicated by a solid line. For example, in a case in which the agricultural material 12 is flapped while in this state, the agricultural material strongly contacts the backbone 15; however, by fixing the agricultural material to the backbone 15 with the raising member 45 interposed therebetween, the agricultural material does not come into contact with the backbone or even if the two come into contact, the contact pressure is suppressed to a low level. Therefore, cracking of the agricultural material 12 is further suppressed. Regarding the raising member 45, PITTO HARU (registered trademark) manufactured by Toto Kogyo Co., Ltd. may be used.

In the present embodiment, the agricultural material 12 is produced by applying a coating solution in which a polymer constituting the polymer layer 42 is dissolved, on a cellulose acylate film material that has been produced elongatedly by a well-known solution film forming method, and drying the coating film thus formed. According to this method, the cellulose acylate film material becomes the cellulose acylate layer 41. The cellulose acylate film material is produced by casting a dope prepared by dissolving cellulose acylate in a solvent, on a continuously moving long belt, thereby forming a cast film, drying the cast film, subsequently peeling the cast film, and drying the cast film. A drum may be used instead of the belt, and the cast film may be cooled and/or dried on the drum and then peeled off.

The agricultural material 12 can also be produced by a melting method, a laminating method, and the like. In the melting method, for example, a polymer for forming the polymer layer 42 is melted using a heating extruder and then cast on a cellulose acylate film material using a T-die, and thereby the polymer layer 42 is provided. In the laminating method, the agricultural material 12 can also be produced by superposing the above-described cellulose acylate material on a long film material that becomes the polymer layer 42 (hereinafter, referred to as polymer film material) and performing lamination processing (lamination). In the case of lamination, an adhesive material may be used between the cellulose acylate material and the polymer film material.

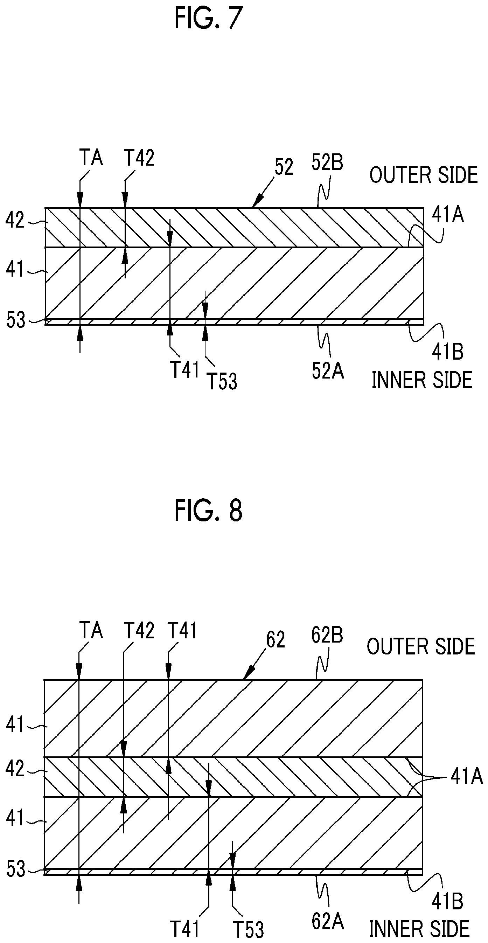

The agricultural material is not limited to the above-described examples, and may have, for example, the following configuration. In Fig. 7, the agricultural material 52 further comprises a saponified layer 53. With regard to the agricultural material 52, the same members as those of the agricultural material 12 will be assigned with the same reference numerals, and further description thereof will not be repeated.

The saponified layer 53 is to further enhance the hydrophilicity of the first material surface 52A, which is a wall surface on the inner side of the agricultural house 10 (see Fig. 1). The saponified layer 53 is provided so as to cover the other surface (hereinafter, referred to as second CA surface) 41B of the cellulose acylate layer 41. This agricultural material 52 is provided in a state in which the saponified layer 53 comes on the inner side of the agricultural house 10, and the polymer layer 42 comes on the outer side. In Fig. 7, reference numeral 52A is assigned to the first material surface, which is a wall surface on the inner side in a case in which this agricultural material 52 is used in the agricultural house 10, and reference numeral 52B is assigned to the second material surface, which is a wall surface on the outer side.

The saponified layer 53 is also formed of cellulose acylate and is formed by saponifying the surface of the above-mentioned cellulose acylate film material. Depending on the degree of saponification, the saponified layer 53 may contain cellulose. That is, the saponified layer 53 is formed of cellulose acylate and/or cellulose. The thickness T53 of the saponified layer 53 is preferably in the range of from 0.1 µm to 20.0 µm, and in this example, the thickness T53 is approximately 0.3 µm.

Since the saponified layer 53 is formed by saponifying a cellulose acylate material as described above, the layer is more hydrophilic than the cellulose acylate layer 41. Therefore, on the first material surface 52A in the case of being used for the agricultural house 10 (see Fig. 1), dew condensation is further suppressed. Since the saponified layer 53 is formed of cellulose acylate and/or cellulose as described above, the layer has moisture permeability, similarly to the cellulose acylate layer 41, and is thin as described above. Therefore, the agricultural material 52 exhibits high moisture permeability similarly to the agricultural material 12 and also has satisfactory workability in the case of being spread. Moreover, since the agricultural material 52 comprises the polymer layer 42, breakage starting from the through-hole 12a is suppressed. Furthermore, in a case in which the agricultural material 52 is fixed to a backbone 15 with screws 17, knick deformation is suppressed.

In the present embodiment, the agricultural material 52 is produced by the following method. The saponified layer 53 is formed by bringing one surface of the above-mentioned cellulose acylate film material into contact with an aqueous solution of sodium hydroxide and/or potassium hydroxide or the like. The aforementioned coating liquid is applied on a surface of the cellulose acylate film material having the saponified layer 53 formed thereon, the surface being on the opposite side of the surface provided with the saponified layer 53. The agricultural material 52 is obtained by drying the coating film thus formed. Therefore, the cellulose acylate film material before saponification becomes the cellulose acylate layer 41 and the saponified layer 53 of the agricultural material 52. Similarly to the agricultural material 12, the agricultural material 52 can also be produced by a melting method, a laminating method, and the like.

In Fig. 8, the agricultural material 62 comprises a polymer layer 42 between a pair of cellulose acylate layers 41. That is, the polymer layer 42 is provided in close contact with both the first CA surface 41A of one cellulose acylate layer 41 and the first CA surface 41A of the other cellulose acylate layer 41. With regard to the agricultural material 62, the same members as those of the agricultural materials 12 and 52 will be assigned with the same reference numerals, and further description thereof will not be repeated.

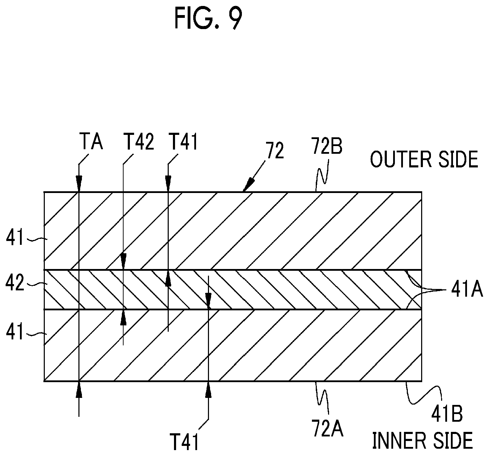

Also in this example, a saponified layer 53 is provided. With regard to the saponified layer 53, the agricultural material 62 that is provided so as to cover the second CA surface 41B of one cellulose acylate layer 41, is provided in a state in which the saponified layer 53 comes to the inner side of the agricultural house 10 (see Fig. 1), and the one cellulose acylate layer 41 that is not provided with the saponified layer 53 comes to the outer side. However, as in the case of the agricultural material 72 shown in Fig. 9, the saponified layer 53 may not be provided as in the agricultural material 12. In Fig. 8, reference numeral 62A is assigned to the first material surface, which is a wall surface on the inner side in a case in which this agricultural material 62 is used in the agricultural house 10, and reference numeral 62B is assigned to the second material surface, which is a wall surface on the outer side. In the case of the agricultural material 72 without the saponified layer 53 (see Fig. 9), either of the pair of cellulose acylate layers 41 may be on the inner side of the agricultural house 10. In Fig. 9, the material surface on the lower side of the paper surface is illustrated as the first material surface 72A, which is a wall surface on the inner side of the agricultural house, and the material surface on the upper side of the paper surface is illustrated as the second material surface 72B, which is a wall surface on the outer side of the agricultural house.

In these examples, even if the polymer layer 42 has pressure-sensitive adhesiveness, since the polymer layer 42 is not exposed to the outside, the workability of spreading is satisfactory, and contamination by sand dust or the like can be suppressed. In addition, the agricultural materials 62 and 72 exhibit high moisture permeability, similarly to the agricultural materials 12 and 52. Furthermore, since the agricultural materials 62 and 72 comprise the polymer layer 42, breakage starting from the through-hole 12a is suppressed. In a case in which the agricultural material 12 is fixed to a backbone 15 with screws 17, knick deformation is suppressed.

The agricultural material 62 can be produced by the following method. Two long cellulose acylate film materials are prepared. One of the cellulose acylate materials is subjected to a saponification treatment in the same manner as in the case of producing the agricultural material 52, and a saponified layer 53 is formed. The aforementioned coating liquid is applied on a surface of the cellulose acylate film material having the saponified layer 53 formed thereon, the surface being on the opposite side of the surface on which the saponified layer 53 is provided. The coating film thus formed is dried; however, this drying brings about a state in which the solvent remains (semi-dry state) as compared with the case of producing the agricultural material 52. The other cellulose acylate material is superposed on the coating film in a semi-dry state, the coating film is dried in the superposed state, and thereby the agricultural material 62 is obtained.

The agricultural material 62 can also be produced by a melting method, a laminating method, and the like. In the melting method, the polymer of the polymer layer 42 is melted using an extruder and then cast on one of the cellulose acylate film materials by using a T-die, thereby the polymer layer 42 is provided, and subsequently, the other cellulose acylate is superposed before the temperature of the polymer layer 42 is lowered. Either one of the two cellulose acylate materials is saponified in advance. In the laminating method, a cellulose acylate material is superposed respectively on one surface and the other surface of the above-mentioned polymer film material that becomes the polymer layer 42, and the assembly is subjected to lamination processing. In this case, an adhesive material may be used between the cellulose acylate material and the polymer film material.

Similarly to the agricultural material 62, the agricultural material 72 can also be produced by any of a coating method, a melting method, and a laminating method.

Furthermore, with regard to the agricultural material 52 or the agricultural material 62, the saponified layer 53 can be produced by an immersion method. The saponification treatment based on the immersion method may be performed under any conditions, and for example, the treatment has a saponification step, a first washing step, a neutralization step, a second washing step, and a drying step. In the saponification step, the film surface is saponified by immersing the film in an aqueous solution of an alkali. As the alkali, for example, sodium hydroxide (NaOH) or potassium hydroxide (KOH) is used. In the first washing step, the film that has undergone the saponification step is washed. Washing is performed with, for example, pure water. In the neutralization step, an acid or an aqueous solution of an acid is used as a neutralizing liquid, and the film that has been subjected to the first washing step is neutralized with this neutralizing liquid. In the second washing step, the film that has been subjected to the neutralization step is washed with, for example, pure water. In the drying step, the film that has been subjected to the second washing step is dried.

Furthermore, the peel strength between the cellulose acylate layer 41 and the polymer layer 42 can be increased by laminating the cellulose acylate layer 41 and the polymer layer 42 and saponifying the laminated sheet by an immersion method. In order to increase the peel strength, for example, the drying conditions after performing the second washing step are adjusted. As the drying conditions, the drying temperature is preferably set to 100°C or higher, and specifically, it is preferable that the drying temperature is set in the range of from 100°C to 150°C. The drying time is preferably in the range of from 30 seconds to 600 seconds, and more preferably in the range of from 50 seconds to 300 seconds. It is preferable to perform draining of water attached to the film surface immediately after the second washing step because there is an effect of preventing a decrease in the film surface temperature during drying, or the like. In the saponification treatment based on the immersion method, the saponified layer 53 is formed on the side having cellulose acylate in the agricultural material 52, and the saponified layer 53 is formed on the cellulose acylate side of both surfaces in the agricultural material 62. On the side where the saponified layer is unnecessary, it is possible not to form the saponified layer by a method such as laminating a protective film.

The above-described examples are cases in which the agricultural materials 12, 52, and 62 were used as films for agricultural houses; however, the agricultural materials 12, 52, and 62 can also be used for other agricultural use applications. Examples of other agricultural use applications include usage as a so-called raising seedling-film that is grown in a state in which the seedlings are surrounded, or usage as a material for a packaging sheet and a packaging bag for packaging harvested agricultural products.

### Examples

### [Example 1] to [Example 18]

Long agricultural materials 12, 52, 62, and 72 were produced, and each was made into a roll form. These were designated as Examples 1 to 17. Example 1 and Example 7 are agricultural materials 12, Examples 2 to 6 and Examples 8 to 12 are agricultural materials 72, Examples 13 to 17 are agricultural materials 62, and Example 18 is agricultural material 52.

In Table 1, the "first CA layer" in the case of the agricultural materials 12 and 72 is the cellulose acylate layer 41 constituting the first material surfaces 12A and 72A, and the first CA layer in the case of the agricultural materials 52 and 62 is the cellulose acylate layer 41 in which the saponified layer 53 is formed on the second CA surface 41B. The "second CA layer" is the cellulose acylate layer 41 that is not provided with the saponified layer 53 and that constitutes the second material surfaces 62B and 72B.

The column "Material" of "Polymer layer" in Table 1 indicates each of the following.
PU1; Polyurethane (ELASTOLLAN (registered trademark) S80A manufactured by BASF SE)
PU2; Polyurethane (ELASTOLLAN (registered trademark) 1164D manufactured by BASF SE)
PU3; Polyurethane (PANDEX (registered trademark) T-5265 manufactured by DIC Covestro Polymer, Ltd.)
PU4; Polyurethane (PANDEX (registered trademark) T-8175 manufactured by DIC Covestro Polymer, Ltd.)
PU5: Polyurethane (PANDEX (registered trademark) T-5102 manufactured by DIC Covestro Polymer, Ltd.)
PP; polypropylene

For each of the agricultural materials 12, 52, 62, and 72, the tear strength and the peel strength were determined, and furthermore, an evaluation on screw driving, the moisture permeability, and the total light transmittance were evaluated. The methods for determining the respective items, evaluation methods, and evaluation criteria are as follows. The respective results are shown in Table 1.

### 1. Tear strength

It was determined by the above-mentioned Elmendorf method.

### 2. Peel strength

For the agricultural materials 12 and 52, the peel strength between the cellulose acylate layer 41 and the polymer layer 42 was determined, and for the agricultural materials 62 and 72, the peel strength between the cellulose acylate layer 41, which constitutes the second material surfaces 62B and 72B, and the polymer layer 42 was determined. The peel strength was determined according to Japanese Industrial Standard JIS Z0237. First, a rectangular sample having a size of 25 mm × 150 mm was cut out from the agricultural materials 12, 52, 62, and 72. The denominator "25 mm" in the above-described unit of peel strength corresponds to the length of the short side of this sample. The cellulose acylate layer 41 is partially peeled off from one edge in the longitudinal direction of this sample. The part of the cellulose acylate layer 41 thus peeled off was pulled toward the other end side of the sample at a rate of 300 mm/min, the force at which the cellulose acylate layer 41 was peeled off from the polymer layer 42 was measured, and this was designated as the peel strength. In a case in which the strength of the polymer layer 42 is weak and difficult to measure, the peel strength can also be measured by affixing a rectangular sample having a size of 25 mm × 150 mm to a glass plate (not shown in the diagram) with an adhesive or the like, partially peeling off the cellulose acylate layer 41, similarly pulling a portion of the cellulose acylate layer thus peeled off, and measuring the peel strength as the force required at the time when the sample is peeled off from the glass plate.

### 3. Evaluation on screw driving

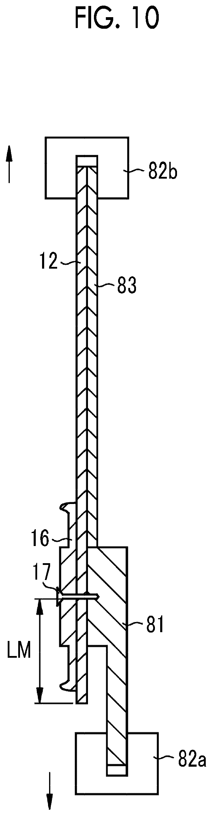

The occurrence of a slit in a case in which a screw 17 was screwed in and the degree of progress of the slit were evaluated as the evaluation on screw driving. The evaluation method will be described with reference to Fig. 10. Meanwhile, since the agricultural materials 12, 52, 62, and 72 were evaluated by a similar method, the following description and Fig. 10 describe the case of evaluating the agricultural material 12 as an example, and for the other agricultural materials 52, 62, and 72, further explanation will not be repeated. First, the pressing member 16 and the backbone 15 shown in Figs. 2 and 3 were respectively cut into a length of 5 cm along the longitudinal direction. The pressing member 16 used was trade name "PITTO HARU (registered trademark) aluminum retainer" manufactured by Toto Kogyo Co., Ltd., and the backbone 15 was trade name "PITTO HARU (registered trademark)" manufactured by Toto Kogyo Co., Ltd.. The backbone 15 cut into a length of 5 cm was processed, and a fixing tool 81 shown in Fig. 10 was produced. The agricultural material 12 was cut into a rectangle having a size of 4 cm × 15 cm and used as a sample.

As shown in Fig. 10, one end part in the longitudinal direction of the sample of the agricultural material 12 was interposed between the pressing member 16 and a metal fixing tool 81, which was used instead of a backbone 15 or a raising member 45 in the agricultural house, and was fixed by screwing in a screw 17 from the side of the pressing member 16. The pressing member 16 and the fixing tool 81 were disposed such that the pressing member came to the side of the second material surface 12B of the sample of the agricultural material 12, and the fixing tool came to the side of the first material surface 12A. The screw 17 was screwed into a position where the distance LM from one end in the longitudinal direction of the sample of the agricultural material 12 to the through-hole 12a was 4 cm. The screw 17 used was a tapping screw having a screw head diameter of 7 mm and a shaft length of 10 mm.

An adhesive tape 83 was stuck to the first material surface 12A from the other end in the longitudinal direction of the sample of the agricultural material 12 to the fixing tool 81 and reinforced the site. By the reinforcement with the adhesive tape 83, it was possible to reliably evaluate the occurrence and progress of a slit at the through-hole 12a in the following tensile test. The fixing tool 81 was gripped by one gripping tool 82a between a pair of gripping tools 82a and 82b of a tensile tester (Tensilon Universal Testing Machine RTG-1210 manufactured by A&D Co., Ltd.), and the other end part of the sample on the side that was reinforced with the adhesive tape 83 was gripped by the other gripping tool 82b. A tensile test was performed by moving the gripping tool 82a at a speed of 200 mm/min in a direction in which the distance between the gripping tool 82a and the gripping tool 82b would increase with respect to each other. In a strograph thus obtained, the maximum value of the load (unit is N) was read and evaluated according to the following criteria. A and B represent that the sample is acceptable, and C represents that the sample is unacceptable.
A; 16 N or more.
B; 10 N or more and less than 16 N.
C; Less than 10 N.

### 4. Moisture permeability

It was measured by the method described above and was evaluated according to the following criteria. A to C represent that the sample is acceptable, and D represents that the sample is unacceptable.
A; 500 g/m²·day or more.
B; 300 g/m²·day or more and less than 500 g/m²·day.
C; 100 g/m²·day or more and less than 300 g/m²·day.
D; Less than 100 g/m²·day.

### 5. Total light transmittance

It was measured with a haze meter (SH7000 manufactured by Nippon Denshoku Industries Co., Ltd.) and was evaluated according to the following criteria. A and B represent that the sample is acceptable, and C represents that the sample is unacceptable.
A; 92% or more.
B; 88% or more and less than 92%.
C; Less than 88%.

### [Example 29] and [Example 30]

The agricultural materials 72 of Examples 2 and 8 were saponified by an immersion method, and these were designated as Examples 29 and 30. The saponification treatment was carried out under the following conditions. An agricultural material was immersed in an aqueous solution of NaOH having a concentration of 1.5 mol/L at a temperature of 50°C for an immersion time of 180 seconds. Subsequently, as a first washing step, the material was subjected to immersion washing with pure water at a temperature of 25°C for 15 seconds, and a neutralization step was carried out with an aqueous solution of sulfuric acid (H2SO4aq) having a concentration of 0.3 mol/L at a temperature of 25°C for a neutralization time of 15 seconds. A second washing step was carried out by immersion washing with pure water at a temperature of 25°C for 15 seconds, performing dehydration of the surface of the film with an air knife, and then drying the film in a drying step at 140°C for 60 seconds. This film was evaluated by methods and criteria similar to those used in Examples 1 to 18, and the results are shown in Table 1.

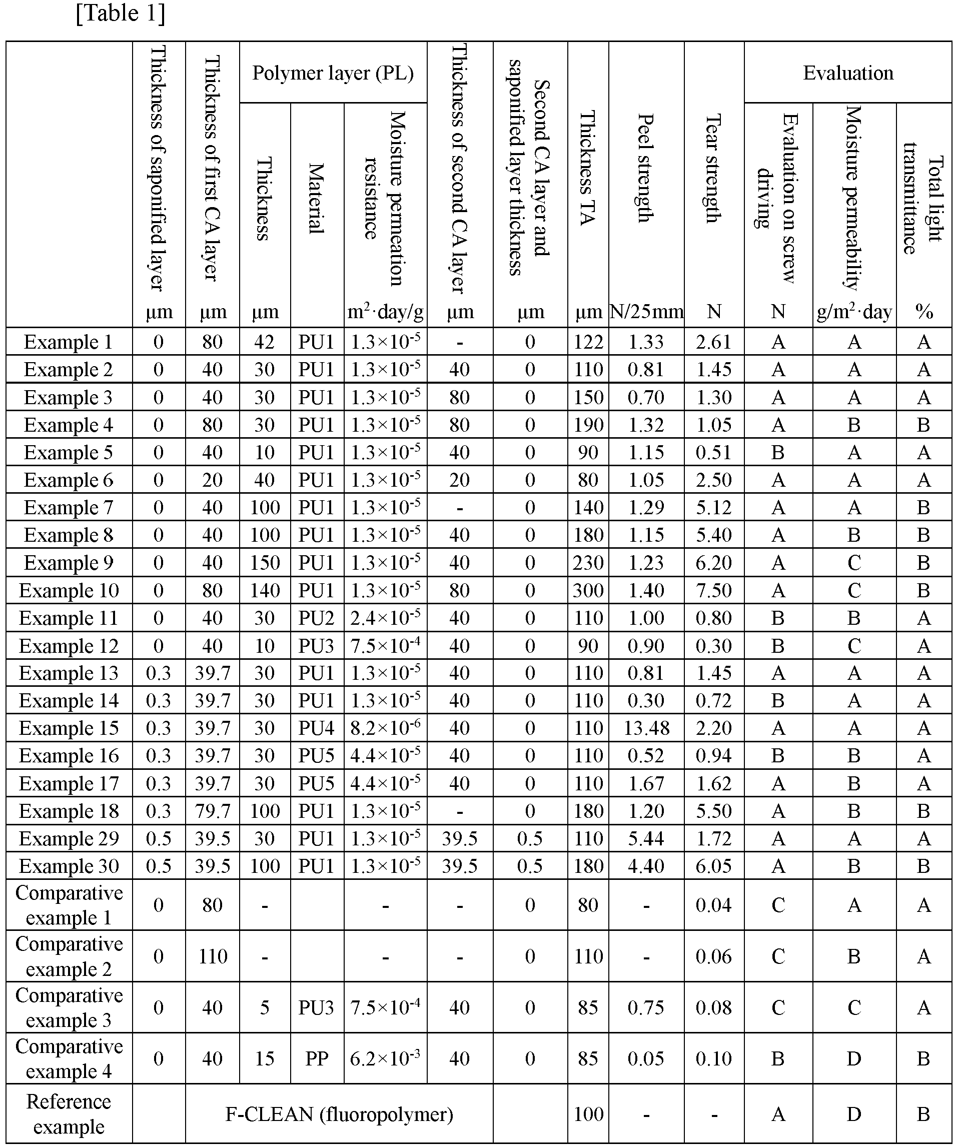

### [Comparative Example 1] to [Comparative Example 4] and [Reference Example]

Agricultural materials having the layer configurations shown in Table 1 were produced, and these were designated as Comparative Examples 1 to 4. In addition, a film having a single-layer structure composed of a fluorine-based polymer F-CLEAN (registered trademark) (manufactured by AGC Green-Tech Co., Ltd.) was used as Reference Example.

The various agricultural materials and the film of Reference Example were measured and evaluated by methods and criteria similar to those used in Examples 1 to 12. The results are shown in Table 1.

### [Example 19] to [Example 28]

Agricultural houses 10 were produced using portions of the agricultural materials 12, 52, 62, and 72 produced in the Examples. An agricultural material roll 20 of each of the agricultural materials 12, 52, 62, and 72 was rolled over a framework 11 and spread. The Example numbers of the agricultural materials 12, 52, 62, and 72 used are shown in the column "Agricultural materials" of Table 2. The "Backbone interval" in Table 2 is the distance between adjacent backbones (distance between centers in the width direction of the backbones) extending in the same direction, and this backbone interval is equal to the distance between the through-holes 12a fixed with screws 17. In addition, the column "Thickness configuration" in Table 2 shows the sum of the thicknesses of the first CA layer and the saponified layer in Table 1, the thickness of the polymer layer, and the thickness of the second CA layer, in order from the left-hand side.

In the agricultural house 10, breakage at the through-holes 12a, ease of spreading, knick deformation, and fluttering of the agricultural materials 12, 52, 62, and 72 were evaluated by the following methods. The evaluation results are shown in Table 2.

### 6. Breakage at through-hole 12a

As shown in Fig. 2, each of the agricultural materials 12, 52, 62, and 72 was fixed to a backbone 15, with a pressing member 16 interposed therebetween. The state of breakage starting from a formed through-hole 12a was observed from the side of the pressing member 16 and was evaluated according to the following criteria. The results are shown in the column "Breakage" in Table 2.
A: No breakage is observed from the beginning to the end of screwing of a screw 17.
B: A breakage extending to the outer side than the pressing member 16 was observed shortly after the beginning of screwing of the screw 17; however, screwing was finished without any progress of the breakage during the screwing thereafter.
C: A breakage extending to the outer side than the pressing member 16 was observed shortly after the beginning of screwing of the screw 17, and the breakage further progressed during the screwing thereafter, causing the agricultural material to break.

### 7. Ease of spreading

The length of the agricultural materials 12, 52, 62, and 72 in each agricultural material roll 20 was adjusted to 50 m. This agricultural material roll 20 was rolled over a framework 11 in a state in which the agricultural material was suspended over a plurality of backbones 15 as shown in Fig. 4, and the ease of rolling was evaluated as the ease of spreading. As the agricultural material roll is lighter, it is easier to handle the agricultural material roll over the framework 11, and as the sticking between superposed agricultural materials in the agricultural material roll is weaker, it is easier to unwind the agricultural material. As such, as the agricultural material roll is lighter, and as the sticking between the agricultural materials in the agricultural material roll is weaker, rolling over the framework 11 is easy. Therefore, the weight of the agricultural material roll and the degree of sticking between the agricultural materials in the agricultural material roll are linked to the degree of the ease of rolling. The evaluation criteria are as follows.
A; It was easy to roll.
B; It was relatively easy.
C; It was slightly difficult to roll; however, it could be rolled.

### 8. Knick deformation

Each of the agricultural materials 12, 52, 62, and 72 was rolled along a backbone 15, and each of the agricultural materials 12, 52, 62, and 72 was fixed using a screw 17, with a pressing member 16 interposed therebetween. The occurrence of knick deformation and cracking in the vicinity of the backbone 15 and the degree of the occurrence were visually observed and evaluated according to the following criteria. Regarding the knick deformation, the degree of strength was judged by the clarity of a fold that was observed in white color. In a case in which the fold is observed to be clearly white, the fold is strong, and as the whiteness is lighter, it is implied that the fold is weak. A to C represent that the sample is acceptable, and D represents that the sample is unacceptable.
A: There was neither knick deformation nor cracking.
B: Knick deformation was recognized; however, the fold was weak, and there was no cracking.
C: There was knick deformation, and a strong fold was observed; however, there was no cracking.
D: There was knick deformation, and a strong fold and cracking were observed.

### 9. Fluttering of agricultural material

In an agricultural house 10, the fluttering of the agricultural materials 12, 52, 62, and 72 in a case in which wind was blown at a wind speed of 2 m/min or more was observed and evaluated according to the following criteria.
A: No fluttering occurred.
B: Slight fluttering occurred; however, the agricultural material did not come into contact with the backbone 15.
C: Fluttering and contact with the backbone 15 occurred.

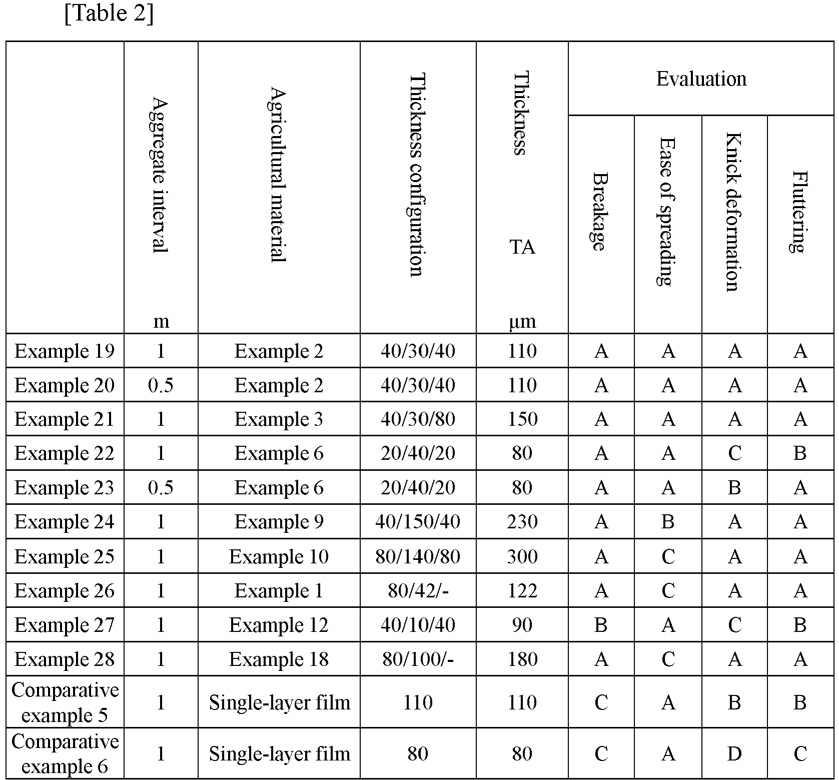

### [Comparative Example 5] to [Comparative Example 6]

An agricultural house was produced using a cellulose acylate film having a single-layer structure. The cellulose acylate of the cellulose acylate film used was TAC, the cellulose acylate film is described as a single-layer film in the column "Agricultural material" in Table 2, and the thickness is shown in the column "Thickness TA" in Table 2.

Each of the agricultural houses was evaluated by methods and criteria similar to those used in Examples 19 to 28. The results are shown in Table 2.

### Explanation of References

10: Agricultural house
11: Framework
11A: Main body
11B: Roof
12, 52, 62, 72: Agricultural material
12A, 52A, 62A, 72A: First material surface
12B, 52B, 62B, 72A: Second material surface
12a: Through-hole
15: Backbone
16: Pressing member
16a: Central part
16b: Thin part
16c: End part
16d: Groove
16s: Contacting surface
17: Screw
20: Agricultural material roll
21: Winding core
41: Cellulose acylate layer
41A: First CA surface
41B: Second CA surface
42: Polymer layer
45: Raising member
53: Saponified layer
81: Fixing tool
82a, 82b: Gripping tool
83: Adhesive tape
L16: Length of pressing member
LM: Distance
T16: Thickness of pressing member
T41: Thickness of cellulose acylate layer
T42: Thickness of polymer layer
T45: Thickness of raising member
T53: Thickness of saponified layer
TA: Thickness of agricultural material
W15: Width of backbone
W16: Width of pressing member

## Claims

1. An agricultural material comprising:
a cellulose acylate layer formed of cellulose acylate; and
a polymer layer provided on one surface of the cellulose acylate layer, **characterised in that** said polymer layer having a moisture permeation resistance of at most 7.5×10⁻⁴ m²·day/g per 1 µm of thickness and being formed of a polymer different from cellulose acylate,
wherein the agricultural material has a tear strength of at least 0.10 N.

2. The agricultural material according to claim 1,
wherein a peel strength between the cellulose acylate layer and the polymer layer is at least 0.10 N/25 mm.

3. The agricultural material according to claim 1 or 2,
wherein the agricultural material comprises the polymer layer between a pair of the cellulose acylate layers.

4. The agricultural material according to any one of claims 1 to 3,
wherein the polymer layer has a thickness in a range of from 10 µm to 150 µm.

5. The agricultural material according to any one of claims 1 to 4,
wherein a thickness is in a range of from 80 µm to 300 µm.

6. The agricultural material according to any one of claims 1 to 5,
wherein the polymer is any one of polyurethane, polyamide, a polyvinyl alcohol-based polymer, a polyacrylamide derivative, or a polyacrylonitrile derivative.

7. An agricultural material roll in which the agricultural material according to any one of claims 1 to 6 formed elongatedly is wound into a roll form.

8. An agricultural house comprising:
a framework formed of a metal backbone; and
the agricultural material according to any one of claims 1 to 6, forming a space partitioned from the outside, by being spread over the framework.

9. The agricultural house according to claim 8,
wherein the agricultural material is fixed to the backbone with screws.

10. The agricultural house according to claim 9,
wherein each of the screws fixes the agricultural material to the backbone, with a plate-shaped pressing member that is disposed on the agricultural material being interposed between the screw and the agricultural material.

## Patentansprüche

1. Landwirtschaftliches Material, umfassend:
eine aus Celluloseacylat gebildete Celluloseacylatschicht; und
eine Polymerschicht, die auf einer Oberfläche der Celluloseacylatschicht vorgesehen ist, **dadurch gekennzeichnet, dass** die Polymerschicht eine Feuchtigkeitspermeationsbeständigkeit von höchstens 7,5 × 10⁻⁴ m²·Tag/g pro 1 µm Dicke aufweist und aus einem von Celluloseacylat verschiedenen Polymer gebildet ist,
wobei das landwirtschaftliche Material eine Reißfestigkeit von mindestens 0,10 N aufweist.

2. Landwirtschaftliches Material gemäß Anspruch 1,
wobei die Schälfestigkeit zwischen der Celluloseacylatschicht und der Polymerschicht mindestens 0,10 N/25 mm beträgt.

3. Landwirtschaftliches Material gemäß Anspruch 1 oder 2,
wobei das landwirtschaftliche Material die Polymerschicht zwischen einem Paar der Celluloseacylatschichten umfasst.

4. Landwirtschaftliches Material gemäß mindestens einem der Ansprüche 1 bis 3,
wobei die Polymerschicht eine Dicke im Bereich von 10 µm bis 150 µm aufweist.

5. Landwirtschaftliches Material gemäß mindestens einem der Ansprüche 1 bis 4,
wobei die Dicke im Bereich von 80 µm bis 300 µm liegt.

6. Landwirtschaftliches Material gemäß mindestens einem der Ansprüche 1 bis 5,
wobei das Polymer eines aus Polyurethan, Polyamid, einem Polymer auf Polyvinylalkoholbasis, einem Polyacrylamidderivat oder einem Polyacrylnitrilderivat ist.

7. Rolle aus landwirtschaftlichem Material, bei der das landwirtschaftliche Material gemäß mindestens einem der Ansprüche 1 bis 6 in länglicher Form zu einer Rolle aufgewickelt ist.

8. Landwirtschaftliches Gebäude, umfassend:
einen aus einem Metallgerüst gebildeten Rahmen; und
das landwirtschaftliche Material gemäß mindestens einem der Ansprüche 1 bis 6, das einen von der Außenseite abgetrennten Raum bildet, indem es über den Rahmen verteilt wird.

9. Landwirtschaftliches Gebäude gemäß Anspruch 8,
wobei das landwirtschaftliche Material mit Schrauben an dem Gerüst befestigt ist.

10. Landwirtschaftliches Gebäude gemäß Anspruch 9,
wobei jede der Schrauben das landwirtschaftliche Material an das Gerüst befestigt, mit einem plattenförmigen Druckelement, das auf dem landwirtschaftlichen Material angeordnet ist, und zwischen der Schraube und dem landwirtschaftlichen Material angeordnet ist.

## Revendications

1. Matériau agricole comprenant :
une couche d'acylate de cellulose formée d'acylate de cellulose ; et
une couche de polymère disposée sur une surface de la couche d'acylate de cellulose, **caractérisé en ce que** ladite couche de polymère présente une résistance à la perméation de l'humidité d'au plus 7,5^{∗}10⁻⁴ m²·jour/g pour 1 µm d'épaisseur et est formée d'un polymère différent de l'acylate de cellulose, dans lequel le matériau agricole présente une résistance au déchirement d'au moins 0,10 N.

2. Matériau agricole selon la revendication 1,
dans lequel une résistance au pelage entre la couche d'acylate de cellulose et la couche de polymère est d'au moins 0,10 N/25 mm.

3. Matériau agricole selon la revendication 1 ou 2,
dans lequel le matériau agricole comprend la couche de polymère entre une paire de couches d'acylate de cellulose.

4. Matériau agricole selon l'une quelconque des revendications 1 à 3,
dans lequel la couche de polymère présente une épaisseur dans une plage de 10 µm à 150 µm.

5. Matériau agricole selon l'une quelconque des revendications 1 à 4,
dans lequel une épaisseur est dans une plage de 80 µm à 300 µm.

6. Matériau agricole selon l'une quelconque des revendications 1 à 5,
dans lequel le polymère est l'un quelconque parmi du polyuréthane, du polyamide, un polymère à base d'alcool polyvinylique, un dérivé de polyacrylamide ou un dérivé de polyacrylonitrile.

7. Rouleau de matériau agricole dans lequel le matériau agricole selon l'une quelconque des revendications 1 à 6 formé de manière allongée est enroulé sous une forme de rouleau.

8. Maison agricole comprenant :
une structure formée d'une ossature métallique ; et
le matériau agricole selon l'une quelconque des revendications 1 à 6, formant un espace cloisonné à partir de l'extérieur en étant étalé par-dessus l'ossature.

9. Maison agricole selon la revendication 8,
dans laquelle le matériau agricole est fixé à l'ossature avec des vis.

10. Maison agricole selon la revendication 9,
dans lequel chacune des vis fixe le matériau agricole à l'ossature, avec un élément de pression en forme de plaque qui est disposé sur le matériau agricole étant interposé entre la vis et le matériau agricole.
